# EUROPÄISCHE PATENTANMELDUNG

(11) **EP 0 654 838 A1**
(43) Veröffentlichungstag der Anmeldung: **24.05.1995**
(21) Anmeldenummer: 93810817.2
(22) Anmeldetag: 24.11.1993
(51) Int. Cl.: H01M 8/24, H01M 8/06, H01M 8/04

(54) **Einrichtung mit Hochtemperatur-Brennstoffzellen und Verfahren zum Anfahrbetrieb der Einrichtung**

(71) Anmelder: SULZER INNOTEC AG, CH-8401 Winterthur (CH)
(72) Erfinder: Diethelm, Roland, CH-8494 Bauma (CH)
(74) Vertreter: Hammer, Bruno, Dr.

(57) **Zusammenfassung**

Die Einrichtung umfasst folgende Bestandteile: mindestens eine Batterie (1) mit Hochtemperatur-Brennstoffzellen; ein erstes Kanalsystem (411 - 417) für Luft; zu jeder Batterie eine umgebende Hülle (4), die wärmedämmend ausgebildet ist und in der das erste Kanalystem zumindest teilweise in Form eines Luftvorerwärmers integriert ist; ein zweites Kanalsystem (12, 2, 3, 30) für Brenngas sowie ein drittes (21, 211 - 214) für Abgas; zu jeder Batterie ein Nachverbrennungsraum (11) zwischen Batterie und Hülle; und mindestens ein im zweiten Kanalsystem angeordneter Prereformer (2). In dieser Einrichtung steht erfindungsgemäss das dritte Kanalsystem mit dem ersten sowie mit dem zweiten Kanalsystem jeweils in wärmeübertragender Verbindung; und dem oder jedem Prereformer ist ein Vorerhitzer in Form von mit Brenngas speisbaren Hilfsbrennern (6) zugeordnet, welcher in das dritte Kanalsystem eingebaut ist. Die Hilfsbrenner dienen als Hilfsmittel bei Anfahren des stromliefernden Betriebs.

## Beschreibung

Die Erfindung betrifft eine Einrichtung mit Hochtemperatur-Brennstoffzellen gemäss Oberbegriff von Anspruch 1. Sie betrifft auch ein Verfahren zum Betrieb der Einrichtung.

Luft und Brenngas reagieren in den Brennstoffzellen und erzeugen dabei eine elektrische Leistung. Das Brenngas besteht vor dem Einspeisen in die Einrichtung vorwiegend aus Methan (Erdgas), dem Wasserdampf zugesetzt ist. Im Prereformer wird Methan und Wasser katalytisch in Wasserstoff und Kohlenmonoxid umgewandelt. Bei den bekannten Einrichtungen ist die Betriebstemperatur des Prereformers rund 800°C, jene der Brennstoffzellen rund 850 bis 900°C.
Eine gattungsgemässe Einrichtung, nämlich ein Zellenstapel mit einer wärmedämmenden Hülle, ist aus der europäischen Anmeldung 92810572.5 (= P.6511) bekannt. Die für die Reaktion benötigte Luft wird in dieser Einrichtung dazu benutzt, die aus dem Zellenstapel wegfliessende Wärme in der Hülle aufzunehmen und wieder zum Reaktionsort zurückzuführen. Die genannte Anmeldung bezieht sich nur auf den stationären Betriebszustand. Wie dieser Betriebszustand herzustellen ist, wie also das Anfahren des Betriebs vorzunehmen ist, ist noch ein offenes Problem. Aus der Druckschrift "Proceedings of the Third International Symposium on Solid Oxide Fuel Cells" (edited by S.C.Singhal and H.Iwahara, 1993) ist eine Einrichtung bekannt, bei der beim Anfahren Wasserstoff als Brenngas verwendet wird und die Luft mittels elektrischer Widerstandsheizungen vorgewärmt wird (siehe insbesondere Fig.2 und Fig.5 in dieser Druckschrift.)

Es ist Aufgabe der vorliegenden Erfindung, die in der oben genannten Anmeldung beschriebene Vorrichtung derart weiter zu entwickeln, dass das Anfahren auf eine einfachere Weise als beim bekannten Anfahrverfahren durchführbar ist. Das Kennzeichen des ersten unabhängigen Anspruchs gibt konstruktive Massnahmen an, mit denen die Aufgabe lösbar ist. Der zweite unabhängige Anspruch bezieht sich auf das erfindungsgemässe Anfahrverfahren.

Mit den Hilfsbrennern, die erfindungsgemäss im Kanalsystem für das Abgas angeordnet sind, lässt sich der oder jeder Prereformer beim Anfahren auf Betriebstemperatur aufheizen. Während dieser Aufheizphase ist die Luftzufuhr in Betrieb; sie liefert den für die Hilfsbrenner benötigten Sauerstoff. Vorteilhafterweise wird für die Hilfsbrenner Brenngas verwendet; ein zusätzliches Gas wie beispielsweise Wasserstoff wird daher beim erfindungsgemässen Verfahren nicht benötigt.

Das dritte Kanalsystem steht mit dem ersten in wärmeleitender Verbindung. Dadurch wird durch die heissen Verbrennungsgase, welche die Hilfsbrenner erzeugen, die in das erste Kanalsystem eingespeiste Luft vorgewärmt. Die vorgewärmte Luft ihrerseits erwärmt die Brennstoffzellen, bevor sie zu den Hilfsbrennern im dritten Kanalsystem gelangt. Wenn der oder jeder Prereformer Betriebstemperatur angenommen hat, kann die Brenngaszufuhr zu den Brennstoffzellen geöffnet werden. Das Brenngas wird zunächst im Prereformer in ein CO/H₂-Gemisch umgesetzt. Dieses Gemisch spült und füllt die Gasräume der Zellen. Danach kann die Verbrennung im Nachverbrennungsraum, der sich zwischen Zellenstapel und Hülle befindet, gezündet werden. Die Brennstoffzellen werden mittels der durch die Hilfsbrenner sowie durch die bei der Nachverbrennung erzeugten Wärme weiter aufgeheizt. Wenn die Batterie in den stromliefernden Betrieb übergeht, können die Hilfsbrenner abschaltet werden. Der Anfahrvorgang ist damit im wesentlichen abgeschlossen.

Die abhängigen Ansprüche 2 bis 6 betreffen verschiedene Ausführungsformen der erfindungsgemässen Einrichtung, die Ansprüche 8 bis 10 beziehen sich jeweils auf eine günstige Wahl eines Betriebsparameters.

Nachfolgend wird die Erfindung im Zusammenhang mit den Zeichnungen näher erläutert. Es zeigen:
- Fig. 1: eine erfindungsgemässe Einrichtung, teilweise aufgeschnitten,
- Fig. 2: Querschnitt durch den Prereformerteil der Einrichtung von Fig.1,
- Fig. 3: ausschnittsweise einen Prereformerteil mit einem Wassererwärmer,
- Fig. 4: ein Diagramm, das schematisch den Temperaturverlauf in der erfindungsgemässen Einrichtung während des stromliefernden Betriebs darstellt, und
- Fig. 5: ein Blockschema, das dem Diagramm der Fig.4 zugeordnet ist.

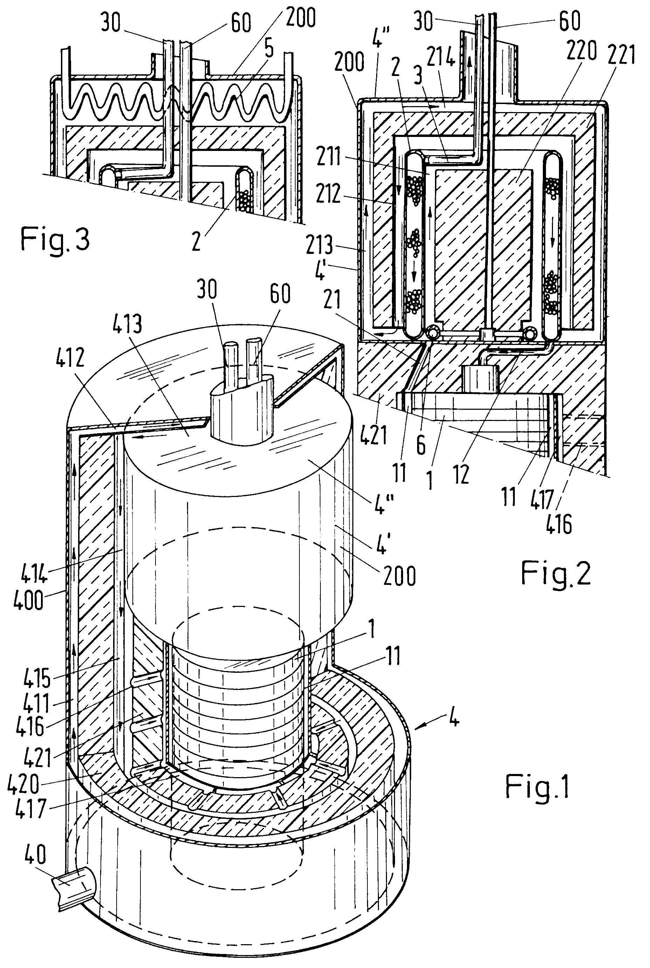

Die in Fig.1 dargestellte Einrichtung umfasst einen Zellenstapel 1, einen zylindrischen Behälter 200 und eine mehrschichtige Hülle 4. Bis auf den Behälter 200 ist im wesentlichen diese Einrichtung bereits in der europäischen Anmeldung 92810572.5 beschrieben worden. Die Hülle besteht aus einer äusseren Hüllenwand 400 mit einem Luftzufuhrstutzen 40, aus Körpern 420 und 421, die aus einem wärmedämmenden Material gefertigt sind, sowie aus einem Kanalsystem für Luft, mit ringspaltförmigen Kanälen 411, 415, 417, radialen Hohlräumen 412, 413 und radialen Kanälen 416. In diesem Kanalsystem - dem ersten Kanalsystem - wird die für die stromliefernde Reaktion benötigte Luft vorgewärmt. Zwischen dem Stapel 1 und dem ersten Kanalsystem befindet sich der Nachverbrennungsraum 11.

Ein Querschnitt durch den Behälter 200 und den oberen Teil des Zellenstapels 1 ist in Fig.2 gezeigt. In diesem Behälter 200 befindet sich der Prereformer 2, der torusförmig ausgebildet ist und ein poröses Material enthält, welches das über die Leitung 30 zugeführte Brenngas bei 800°C katalytisch in ein CO/H₂-Gemisch umsetzt. Mit Pfeilen im Prereformer 2 ist die Fliessrichtung des Gases angegeben. Über die Leitung 12 tritt das erzeugte Gemisch in den Zellenstapel 1 ein. Die torusförmige Wandung des Prereformers 2 bildet zusammen mit den Leitungen 30, 3 und 12 das zweite Kanalsystem.

Ein zylindrischer Füllkörper 220 und ein topfförmiger Körper 221 bilden zusammen mit dem Prereformer 2 das dritte Kanalsystem, in dem beim Betrieb der Einrichtung das Abgas durch ringspaltförmige Kanäle 211, 212, 213 und den radialen Hohlraum 214 fliesst. Pfeile geben die Fliessrichtung des Abgases an. Zum dritten Kanalsystem gehört auch die Leitung 21, über die der Nachverbrennungsraum 11 mit dem Behälter 200 verbunden ist. Die Körper 220 und 221 sind aus einem wärmedämmenden Material gefertigt.

Die zylindrische Wand 4' und die Deckfläche 4'' des Behälters 200 bilden die wärmeleitende Verbindung zwischen dem dritten und dem ersten Kanalsystem. Hier wird die im ersten Kanalsystem fliessende Luft mit der Abgaswärme vorgewärmt. Die Wandung des Prereformers 2 und die Leitung 3 bilden zusammen die wärmeleitende Verbindung zwischen dem dritten und dem zweiten Kanalsystem. In der Leitung 3 wird das zugeführte Brenngas mit dem heissen Abgas erhitzt.

Erfindungsgemäss befindet sich im dritten Kanalsystem ein Hilfsbrenner 6, der über die Leitung 60 mit Brenngas speisbar ist und der bezüglich dem Prereformer 2 so angeordnet ist, dass durch die Verbrennungsgase der Prereformer 2 auf Betriebstemperatur aufgeheizt werden kann. Die Verbrennung findet unter Zuführung von Luft über die Leitung 21 statt. Die Hilfsbrenner-Flamme kann mit einem elektrisch erzeugten Funken gezündet werden; eine entsprechende Zündvorrichtung ist in der Zeichnung nicht dargestellt.

Beim oder nach dem Austritt des Abgases aus der Einrichtung kann dieses zusätzlich dazu verwendet werden, Brauchwasser zu erwärmen. In Fig.3 ist eine abgewandelte Form des Behälters 200 teilweise dargestellt, bei dem zur Erwärmung von Brauchwasser mit Abgas ein Wärmetauscher 5 integriert ist.

In den Figuren 1 und 2 ist eine Einrichtung dargestellt, die nur einen Zellenstapel 1 umfasst. In der erfindungsgemässen Einrichtung können aber auch zwei oder mehr Zellenstapel 1 parallel zusammengeschaltet sein. Dabei können die Zellenstapel jeweils Teil eines Moduls sein, wobei die einzelnen Module den gleichen Aufbau haben. Die Einrichtung in Fig.1 ist ein Beispiel für einen solchen Modul. Bei diesem Modul ist der Prereformer 2 im Modul integriert. Es ist auch möglich, den Prereformer 2 ausserhalb des Moduls vorzusehen. In diesem Fall kann ein gemeinsamer Prereformer für alle Module verwendet werden.

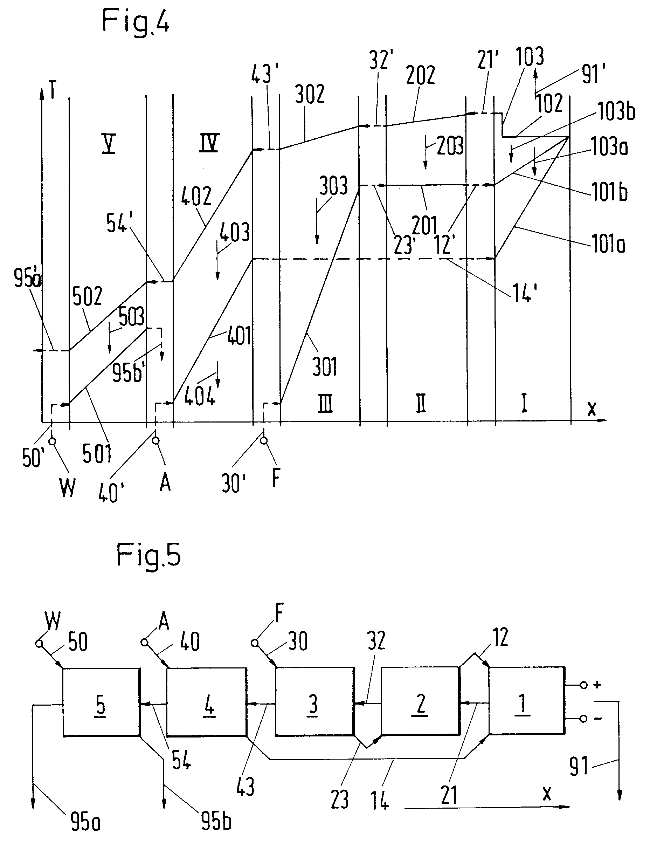

Die erfindungsgemässe Einrichtung umfasst mindestens jeweils einen Zellenstapel 1, einen Prereformer 2, einen Erhitzer 3 für das Brenngas und ein Luftvorerwärmer 4, der gleichzeitig als Hülle des Zellenstapels ausgebildet ist; zusätzlich kann ein Wassererwärmer 5 vorgesehen sein. Diese Bestandteile können schematisch als eine Kette von Blöcken dargestellt werden: siehe Fig.5, wobei für die Blöcke die gleichen Bezugszeichen wie für die entsprechenden Bestandteile der Einrichtung verwendet worden sind. In Fig.4 ist schematisch dargestellt, welcher Temperaturverlauf - im stationären Betriebszustand - für die Luft, das Brenngas, das Abgas und das Brauchwasser den Blöcken 1 bis 5 zugeordnet werden kann. Dabei entsprechen die mit den römischen Ziffern I bis V bezeichneten Streifen den Blöcken 1 bis 5 von Fig.5; die x-Achse gibt die lineare Abfolge der Blöcke an.

Die Kurvenstücke 401 und 101a in Fig.4 entsprechen der Lufttemperatur, die Kurvenstücke 301, 201 und 101b der Gastemperatur, die Kurvenstücke 102, 103, 202, 302, 402 und 502 der Abgastemperatur und das Kurvenstück 501 der Wassertemperatur. Das vertikale Kurvenstück 103 im Streifen I gibt den Temperatursprung an, der durch die Nachverbrennung entsteht.

Die vertikalen Pfeile 103b, 203 und 303 geben den Wärmetransport zwischen Abgas und Brenngas an, die Pfeile 103a und 403 den Wärmetransport zwischen Abgas und Luft und der Pfeil 503 den Wärmetransport zwischen Abgas und Brauchwasser. Der Pfeil 404 steht für die über die Hülle 4 abgehende Verlustwärme. Die gestrichelt gezeichneten Pfeile 21', 32', 43', 54', 95a' entsprechen den Pfeilen 21, 32, 43, 54 bzw. 95a in Fig.5; sie geben den Transport des Abgases an. Den gestrichelt gezeichneten Pfeilen 40', 14' (Luft) sowie 30', 23', 12' (Brenngas) sowie 50', 95b' (Wasser) entsprechen in Fig.5 die Pfeile 40, 14, 30, 23, 12, 50 bzw. 95b. Die Pfeile 91 bzw. 91' beziehen sich auf die abgegebene elektrische Leistung. Die Punkte W, A und F stehen für die Einspeisestellen von Wasser, Luft bzw. Brenngas. Der Plus- und der Minuspol am Block 1 beziehen sich auf die Batteriepole.

## Patentansprüche

1. Einrichtung, folgende Bestandteile umfassend:
- mindestens eine Batterie (1) mit Hochtemperatur-Brennstoffzellen,
- ein erstes Kanalsystem (411 - 417) für Luft,
- zu jeder Batterie eine umgebende Hülle (4), die wärmedämmend ausgebildet ist und in der das erste Kanalystem zumindest teilweise in Form eines Luftvorerwärmers integriert ist,
- ein zweites Kanalsystem (12, 2, 3, 30) für Brenngas,
- ein drittes Kanalsystem (21, 211 - 214) für Abgas,
- zu jeder Batterie ein Nachverbrennungsraum (11) zwischen Batterie und Hülle,
- mindestens ein im zweiten Kanalsystem angeordneter Prereformer (2),
welche Einrichtung dadurch gekennzeichnet ist, dass das dritte Kanalsystem mit dem ersten sowie mit dem zweiten Kanalsystem jeweils in wärmeübertragender Verbindung steht und dass dem oder jedem Prereformer ein Vorerhitzer (6, 60) in Form von mit Brenngas speisbaren Hilfsbrennern (6) zugeordnet ist, welcher in das dritte Kanalsystem eingebaut ist.

2. Einrichtung nach Anspruch 1, dadurch gekennzeichnet, dass die Batterie (1) im wesentlichen in Form eines zylindrischen Zellenstapels vorliegt und der zugeordnete Nachverbrennungsraum (11) den Zellenstapel in Form eines Ringspalts umgibt.

3. Einrichtung nach Anspruch 1 oder 2, dadurch gekennzeichnet, dass die Einrichtung einen Modul bildet oder aus gleich gebauten Modulen zusammengesetzt ist.

4. Einrichtung nach Anspruch 3, dadurch gekennzeichnet, dass die Batterie (1) eines Moduls aus einem Zellenstapel besteht und der Modul im wesentlichen zylinderförmig ist.

5. Einrichtung nach Anspruch 1 oder 2, dadurch gekennzeichnet, dass die Anzahl der Batterien (1) mindestens zwei beträgt und dass ein gemeinsamer Prereformer (2) den Batterien zugeordnet ist.

6. Einrichtung nach einem der Ansprüche 1 bis 5, dadurch gekennzeichnet, dass den Hilfsbrenner (6) eine elektrische Zündvorrichtung zugeordnet ist.

7. Verfahren zum Anfahren des Betriebs der Einrichtung nach einem der Ansprüche 1 bis 6, folgende Schritte umfassend:
- Luft in das erste Kanalsystem einspeisen,
- Hilfsbrenner in Betrieb setzen und Prereformer auf Betriebstemperatur aufheizen,
- Brennstoffzellen mit durch Hilfsbrenner vorgewärmter Luft erwärmen,
- Brenngas in das zweite Kanalsystem einspeisen, wobei durch Prereformer ein CO/H₂-Gemisch erzeugt wird,
- nach Spülen und Füllen der Brenngasräume der Zellen mit CO/H₂-Gemisch, das aus den Zellen austretenden Gemisch zünden, wobei eine Nachverbrennung einsetzt,
- Brennstoffzellen mittels der durch Hilfsbrenner sowie bei Nachverbrennung erzeugten Wärme weiter aufheizen,
- Hilfsbrenner beim Übergang in den stromliefernden Batteriebetrieb abschalten.

8. Verfahren nach Anspruch 7, dadurch gekennzeichnet, dass ein konstanter Massenstrom für die Luft vorgesehen wird.

9. Verfahren nach einem der Ansprüche 6 bis 8, dadurch gekennzeichnet, dass die Brennstoffzellen mit durch Hilfsbrenner vorgewärmter Luft auf rund 300 °C erwärmt werden.

10. Verfahren nach einem der Ansprüche 6 bis 9, dadurch gekennzeichnet, dass die Hilfsbrenner beim Übergang in den stromliefernden Batteriebetrieb bei rund 800 °C abgeschaltet werden.
